## Europäisches Patentamt
## European Patent Office
## Office européen des brevets

(19)

(11) Veröffentlichungsnummer: **0 003 802**
**B1**

(12) **EUROPÄISCHE PATENTSCHRIFT**

(45) Veröffentlichungstag der Patentschrift:
**02.06.82**

(51) Int. Cl.³: **F 16 H 25/24**

(21) Anmeldenummer: **79100440.1**

(22) Anmeldetag: **14.02.79**

(54) **Spielfreie Spindellagerung.**

(30) Priorität: **23.02.78 CH 1990/78**

(43) Veröffentlichungstag der Anmeldung:
**05.09.79 Patentblatt 79/18**

(45) Bekanntmachung des Hinweises auf die Patenterteilung:
**02.06.82 Patentblatt 82/22**

(84) Benannte Vertragsstaaten:
**DE FR GB NL SE**

(56) Entgegenhaltungen:
**DE-A-2 109 640**
**DE-A-2 122 753**
**US-A-2 321 442**
**US-A-2 611 280**
**US-A-3 165 007**
**US-A-3 244 021**
**US-A-3 398 599**

(73) Patentinhaber: **Moser, Fernand, Sur le Crêt 83 H,
CH-2606 Corgémont (CH)**

(72) Erfinder: **Moser, Fernand, Sur le Crêt 83 H,
CH-2606 Corgémont (CH)**

(74) Vertreter: **Blum, Rudolf E. et al, c/o E. Blum & Co
Patentanwälte Vorderberg 11, CH-8044 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Spielfreie Spindellagerung

Die Erfindung betrifft eine spielfreie Spindellagerung für eine Gewindespindel bezüglich eines Supports mit mindestens einer um ihre Achse drehbar gelagerten Rolle, die über Rillen an ihrem Umfang in Eingriff mit dem Gewinde der Gewindespindel steht, wobei die Rollenachse quer zur Gewindespindel verstellbar ist und wobei die Rolle achsparallel zur Gewindespindel angeordnet und die Spindel beidseitig der Rolle gegen diese abgestützt ist, so daß die relative Lage von Spindel- und Rollenachse beim Betrieb unverändert bleibt.

Eine Spindellagerung dieser Art ist etwa aus der US-A-3 244 021 bekannt. Die radiale Abstützung der Spindel erfolgt dabei durch zwei walzenartige Stützrollen. Die Stützrollen sowie die Lagerrolle selbst weisen Achsstummel auf, die in exzentrischen Zylindern in einem Gehäuse gelagert sind. Durch Drehen der Zylinder sind die Stützrollen und die Lagerrolle zur Spielfreimachung in Radialrichtung verstellbar, wobei die Lage der exzentrischen Zylinder sowohl die Achsrichtungen als auch die Achsabstände bestimmen. Die Wegnahme des Spiels erfordert demzufolge einen komplizierten Verstellvorgang, indem mehrere Exzenter unabhängig voneinander eingestellt werden müssen, wobei insbesondere Parallelitätsprobleme auftauchen.

Aus US-A-2 611 280 andererseits ist ein Spindelgetriebe bekannt, bei welchem die Spindel beidseits einer Lagerrolle gegen diese abgestützt ist. Die Lagerrolle weist Achsstummel auf, mittels welcher sie in einem quer zur Spindelachse verstellbaren Schlitten radial gelagert ist. Das Getriebe setzt die einseitige Beaufschlagung der Spindel voraus und kann insbesondere in Axialrichtung nicht spielfrei gemacht werden.

Es stellt sich die Aufgabe, eine hochgenaue und spielfreie Spindellagerung zur beiderseitigen Aufnahme großer Kräfte zu schaffen, die zugleich eine einfache Ausgestaltung aufweist und insbesondere in einfacher Weise spielfrei gemacht werden kann.

Zur Lösung dieser Aufgabe ist gemäß der Erfindung vorgesehen, daß die Rolle mittels Radialkräfte aufnehmenden Wälzlagern auf einer feststehenden, quer zur Gewindespindel zur Wegnahme jeden Spiels zwischen Rolle und Spindel verstellbaren Stange und mittels Axialkräften aufnehmenden Wälzlagern im Support drehbar und axial spielfrei einstellbar gelagert ist.

Bei einer bevorzugten Ausführungsform ist vorgesehen, daß die Gewindespindel in zwei als Nadellager ausgebildeten Radiallagern am Support gelagert ist, die beidseits der Rolle angeordnet sind, wobei die Nadeln auf den abgeflachten Spitzen des Gewindes der Gewindespindel laufen.

Durch die Radiallager ist die Gewindespindel um ihren ganzen Umfang herum abgestützt. Sind die Radiallager von Nadellagern gebildet, so sind die Reibungsverhältnisse am günstigsten, weil dann in der gesamten Spindellagerung ausschließlich Rollreibung, also keine Gleitreibung herrscht.

Die Radiallager sorgen für eine hochpräzise, über den ganzen Umfang gleichmäßige radiale Abstützung, was zur Unveränderbarkeit der relativen Lage von Spindel- und Rollenachse und damit zu der gewünschten hohen Belastbarkeit der Gewindespindel in radialer Richtung bei unveränderter Präzision beiträgt. Die Abstützung in axialer Richtung wird hauptsächlich durch die achsparallele Rolle erreicht. Diese ist quer zur Gewindespindel einstellbar, so daß Spielfreiheit und nach Wunsch auch eine Vorspannung in axialer Richtung erzielbar ist.

Bei einer vorteilhaften Realisierung der Verstellbarkeit der Rollen sind die oder jede Rolle an einem im Support quer zur Gewindespindel verstellbar angeordneten Schlitten gelagert.

Werden zur Erhöhung der Belastbarkeit mehrere Rollen gewünscht, so sind diese vorteilhaft gleichmäßig um den Umfang der Gewindespindel verteilt und zueinander mit ihren Rillen um einen dem Umfangsabstand zwischen den einzelnen Rollen entsprechenden Bruchteil der Ganghöhe des Gewindes der Gewindespindel axial versetzt angeordnet. Der axiale Versatz der Rollen läßt sich dabei auf einfachste Weise mittels axial bemessenen Unterlegscheiben bewirken, die zwischen den Rollenstirnflächen und Lagerstegen des Schlittens für die Rollenachsen angeordnet sind. Auf diese Weise kann die axiale Einstellung der Rollen relativ zueinander einfach und genau vor dem radialen Anstellen der Rollen an die Spindel durch Verschieben jedes für jede Rolle einzeln vorgesehenen Schlittens an die Gewindespindel heran vorgenommen werden.

Bei einem anderen bevorzugten Ausführungsbeispiel ist vorgesehen, daß die Rolle und der Support an einer parallel zur Spindelachse verlaufenden Führungsstange längs deren Achse verschiebbar angeordnet sind, wobei die Stange in Lagerböcken einstellbar gegen die Spindel abgestützt ist. Die Führungsstange stützt die Rolle gegenüber der Spindel ab und stellt die Unveränderbarkeit der relativen Lage von Spindel- und Rollenachse sicher. Durch die Verstellbarkeit des Abstands zwischen Führungsstangenachse und Spindelachse ist die Rolle quer zur Spindel verschiebbar, wodurch Spielfreiheit in axialer Richtung erreicht werden kann.

Die Rillen der Rolle können in Ebenen senkrecht zur Achse der Gewindespindel liegen. Die Vorschubgeschwindigkeit der Spindel ergibt sich dann aus der Ganghöhe des Gewindes der Gewindespindel und der Spindeldrehzahl.

Soll diese Vorschubgeschwindigkeit erhöht werden, so können die Rillen der Rolle ein mit dem Gewinde der Gewindespindel zusammenwirkendes Gewinde bilden. Hierbei addieren sich die Ganghöhen der Gewinde auf der Gewindespindel und der Rolle im Sinne einer entsprechenden Erhöhung der Vorschubgeschwindigkeit.

Die Erfindung ist im folgenden anhand schematischer Zeichnungen mit weiteren Einzelheiten näher erläutert. Es zeigt

Fig. 1 eine Schnittansicht einer ersten Spindellagerung gemäß der Erfindung nach der Linie I-I in Fig. 2,

Fig. 2 eine teilweise geschnittene Seitenansicht dieser Spindellagerung,

Fig. 3 einen Querschnitt nach der Linie III-III in Fig. 2,

Fig. 4 eine Schnittansicht einer zweiten Spindellagerung gemäß der Erfindung,

Fig. 5 einen Querschnitt längs der Linie V-V in Fig. 4.

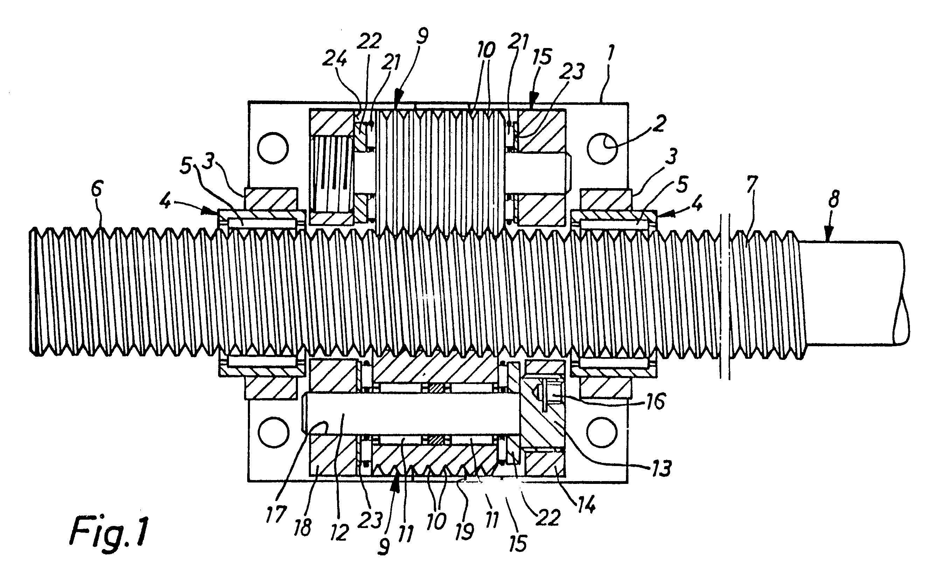

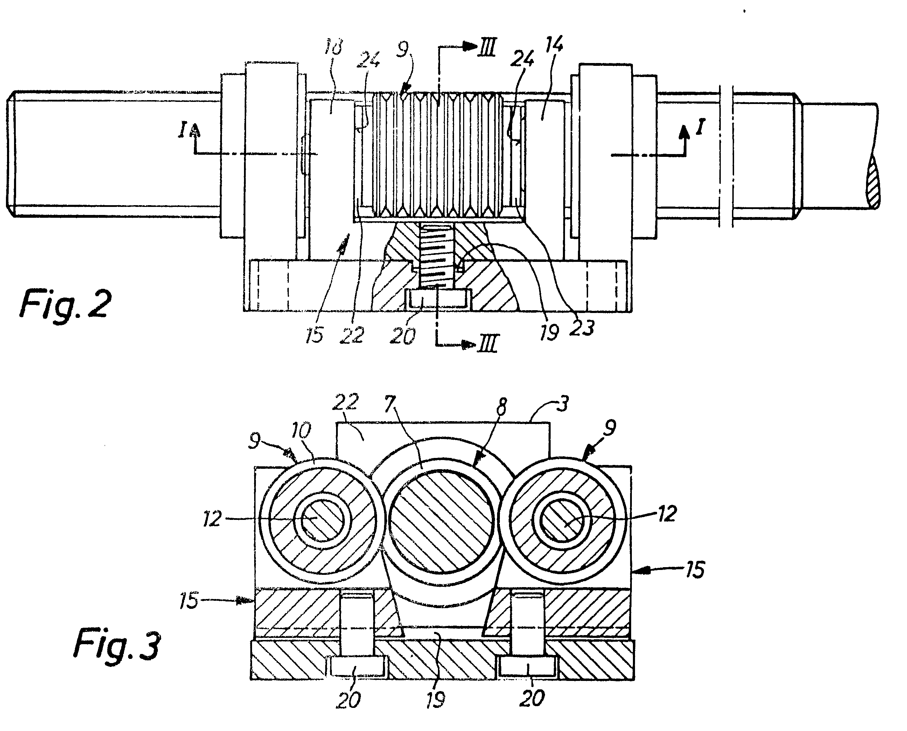

Die gezeigte erste Spindellagerung gemäß den Fig. 1 bis 3 umfaßt einen an einer nicht gezeigten Unterlage über Befestigungslöcher 2 angebrachten Support 1. Der Support 1 hat an zwei gegenüberliegenden Enden je einen Lagerblock 3 mit einer Lagerbohrung, in der ein Laufkranz eines radialen Nadellagers 4 untergebracht ist. Die Nadeln 5 des Nadellagers wälzen auf den abgeflachten Gewindespitzen 6 des Gewindes 7 der zu lagernden Gewindespindel 8 ab. Auf diese Weise ist die Gewindespindel 8 an zwei axial voneinander entfernten Stellen radial um ihren ganzen Umfang herum gleichmäßig und ausschließlich mit Rollreibung abgestützt.

Wenn die in einem Gleitlager entstehende Reibung in Kauf genommen werden kann und die radialen Belastungen der Spindel die für ein Nadellager oder ein anderes Wälzlager übertragbare Belastung übersteigt, können statt der Nadellager 4 auch Gleitlager vorgesehen sein.

Axial zwischen den Nadellagern 4 sind am Umfang der Gewindespindel 8 um 180° versetzt zwei Rollen 9 achsparallel zur Gewindespindel 8 angeordnet. Die Rollen 9 haben an ihrem Umfang mehrere in Ebenen senkrecht zur Rollenachse und damit zur Achse der Gewindespindel angeordnete V-förmige Rillen 10, die so bemessen sind, daß sie sämtliche in Eingriff mit dem Gewinde 7 der Gewindespindel 8 unter Wälzberührung der Rillenflanken und der Gewindeflanken des Gewindes 7 stehen. Die beiden Rollen 9 sind über radiale Nadellager 11 auf Achsen 12 angeordnet. Jede Achse 12 ist mit einem Kopf 13 in einem Schenkel 14 eines U-förmigen Schlittens 15 eingeschraubt und mittels einer Vorrichtung 16 zum Verklemmen des Schraubgewindes des Kopfes 13 in dem Schenkel 14 gesichert. Mit seinem anderen glatten Ende steckt die Achse 12 in einem Aufnahmeloch 17 des gegenüberliegenden U-Schenkels 18 des Schlittens 15. Jeder Schlitten 15 ist in einer Nut 19 in der Lagerplatte verschiebbar mittels einer Schraube 20 festklemmbar. Die Nut 19 verläuft quer zu den Achsen der Gewindespindel 8 una der Rollen 9.

Die Rollen 9 sind über axiale Nadellager 21 und Unterlegescheiben 22, 23 an den einander zugewandten Innenflächen der Schenkel 14, 18 abgestützt. Die Unterlegescheiben 22. 23 sind axial genau kalibriert und unterschiedlich stark. Sie sind derart bemessen, daß die Rollen genau mit einem der halben Ganghöhe des Gewindes 7 entsprechenden axialen Versatz zueinander in den beiden Schlitten vormontiert werden können. Sind zur Erhöhung der axialen Belastbarkeit der Spindel 8 drei oder vier Rollen 3 am Umfang der Gewindespindel 8 vorgesehen, so sind sie um 120° oder um 90° versetzt zueinander angeordnet, und zwar mit einem axialen Versatz zueinander, der einem Drittel bzw. einem Viertel der Ganghöhe des Gewindes 7 der Gewindespindel 8 entspricht.

Die Verwendung der Unterlegscheiben 22, 23 oder noch weiterer gleich oder unterschiedlich axial kalibrierter Unterlegscheiben ermöglicht ohne großen Aufwand ein so genaues axiales Einstellen der Rollen 9 relativ zueinander, oaß beim Zusammenwirken mit der Gewindespindel 8 axiale Spielfreiheit und nach Wunsch eine gewünschte Vorspannung zwischen den Gewindeflanken und den Flanken der Rillen 10 erzielbar ist.

Zur Endmontage werden die die Rollen 9 lagernden Schlitten 15 längs der Nut 19 an die Gewindespindel sc herangefahren, daß auch in radialer Richtung jegliches Spiel aufgehoben wird. Dann werden die Stellschrauben 20 festgezogen.

Soll die Vorschubgeschwindigkeit der Spindel erhöht werden, so werden die Rillen 10 nicht von geschlossenen, in Ebenen senkrecht zu den Rollen 9 stehenden Nuten, sondern von zusammenhängenden Gewindenuten eines Gewindes z. B. gleicher Ganghöhe wie das Gewinde 7 der Gewindespindel 8 gebildet. Bei einer solchen Anordnung läßt sich eine besonders hohe Vorschubgeschwindigkeit der Gewindespindel erreichen, weil die Ganghöhen der Gewinde der Rollen 9 und der Gewindespindel 8 sich bezüglich der Vorschubgeschwindigkeit addieren.

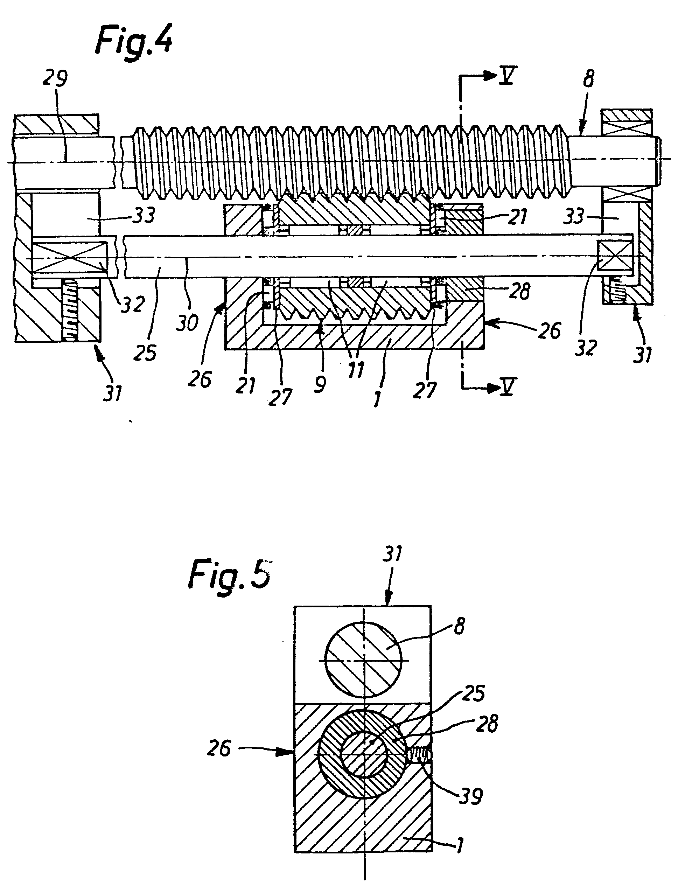

Eine zweite Ausführungsform der Erfindung ist in den Fig. 4 und 5 dargestellt. Die Rolle 9 ist dabei auf einer Führungsstange 25 und zwischen Schenkeln 26 des Supports 1 angeordnet. Die Rolle 9 ist mit den radialen Nadellagern 11 auf der Stange und mit den axialen Nadellagern 21 zwischen den Schenkeln 26 gelagert. Zwischen den axialen Nadellagern 21 und den Schenkeln 26 sind Unterlegscheiben 27 angeordnet, die als Lagerflächen dienen. Mittels eines Einsatzes 28 in einem der Schenkel 26 kann die Anordnung der Rolle zwischen den Schenkeln spielfrei gemacht werden. Der Einsatz 28 wird durch eine Schraube 29 fixiert.

Die Führungsstange 25 ist in denselben Lagerblöcken 31 wie die Spindel 8 beidseitig gehalten. Spindelachse 29 und Führungsstangenachse 30 bleiben dadurch beim Betrieb in unveränderbarer, relativer Lage. Die Lagerblöcke 31 sind beidseitig an den Spindel- bzw.

Führungsstangenenden angeordnet. Die Führungsstange 25 ist derart in den Lagerblöcken 31 angebracht, daß sie quer zur Spindelachse 29 einstellbar ist, wodurch der Abstand zwischen Spindel- und Führungsstangenachse 29 bzw. 30 so verändert werden kann, daß die Rolle 9 völlig spielfrei auf der Spindel 8 sitzt. Diese Einstellbarkeit der Führungsstange 25 wird dadurch ermöglicht, daß sie abgeflachte Enden 32 aufweist, welche in quer zur Spindelachse 29 verlaufenden Ausnehmungen in den Lagerblöcken verschiebbar und mittels auf die Abflachungen 32 wirkenden Schrauben darin fixierbar sind.

Es ist ersichtlich, daß mit der Spindellagerung gemäß der Erfindung mit einfachen Mitteln eine hochpräzise, sowohl axial als auch radial leicht spielfrei zu machende Konstruktion geschaffen ist, die hohe Belastbarkeit und hohe Drehzahlen der Gewindespindel zuläßt.

**Patentansprüche**

1. Spielfreie Spindellagerung für eine Gewindespindel (8) bezüglich eines Supports (1) mit mindestens einer um ihre Achse drehbar gelagerten Rolle (9), die über Rillen an ihrem Umfang in Eingriff mit dem Gewinde der Gewindespindel steht, wobei die Rollenachse quer zur Gewindespindel (8) verstellbar ist und wobei die Rolle achsparallel zur Gewindespindel angeordnet und die Spindel (8) beidseitig der Rolle (9) gegen diese abgestützt ist, so daß die relative Lage von Spindel- und Rollenachse beim Betrieb unverändert bleibt, dadurch gekennzeichnet, daß die Rolle (9) mittels Radialkräfte aufnehmenden Wälzlagern (11) auf einer feststehenden, quer zur Gewindespindel zur Wegnahme jeden Spiels zwischen Rolle und Spindel verstellbaren Stange (12; 25) und mittels Axialkräften aufnehmenden Wälzlagern (21) im Support (1) drehbar und axial spielfrei einstellbar gelagert ist.

2. Spindellagerung nach Anspruch 1, dadurch gekennzeichnet, daß die Rillen (10) der Rolle in Ebenen senkrecht zur Achse der Gewindespindel liegen.

3. Spindellagerung nach Anspruch 1, dadurch gekennzeichnet, daß die Rillen (10) der Rolle ein mit dem Gewinde der Gewindespindel zusammenwirkendes Gewinde bilden.

4. Spindellagerung nach einem der Ansprüche 2 und 3, dadurch gekennzeichnet, daß die Gewindespindel in zwei als Nadellager ausgebildeten Radiallagern (4) am Support (1) gelagert ist, die beidseits der Rolle (9) angeordnet sind, wobei die Nadeln auf den abgeflachten Spitzen (6) des Gewindes (7) der Gewindespindel laufen.

5. Spindellagerung nach Anspruch 4, dadurch gekennzeichnet, daß die Rolle (9) an einem im Support (1) quer zur Gewindespindel (8) verstellbar angeordneten Schlitten (15) gelagert ist und die Wälzlager (11; 21) Nadellager sind.

6. Spindellagerung nach einem der Ansprüche 1 bis 5, dadurch gekennzeichnet, daß bei Verwendung mehrerer Rollen (9) diese gleichmäßig um den Umfang der Gewindespindel (8) verteilt und zueinander mit ihren Rollen (10) um einen dem Umfangsabstand zwischen den einzelnen Rollen entsprechenden Bruchteil der Ganghöhe des Gewindes (7) der Gewindespindel axial versetzt angeordnet sind.

7. Spindellagerung nach Anspruch 5 und 6, dadurch gekennzeichnet, daß der axiale Versatz der Rollen (9) mittels axial exakt bemessenen Unterlegscheiben (22, 23) bewirkt ist, die zwischen den Rollenstirnflächen und einander zugewandten Flächen (24) an Lagerstegen (14, 18) des Schlittens (15) für die Rollenachsen (12) angeordnet sind.

8. Spindellagerung nach Anspruch 2, dadurch gekennzeichnet, daß die Rolle (9) und der Support (1) an der Stange (25) längs deren Achse verschiebbar angeordnet sind, wobei die Stange (25) in Lagerblöcken (31) einstellbar gegen die Spindel (8) abgestützt ist.

**Claims**

1. A support free from play for a threaded spindle (8) relative to a support (1) having at least one roller (9) supported rotationally around its axis which engages into the threads of the threaded spindle via grooves arranged at its circumference, whereby the axis of the roller is adjustable laterally to the threaded spindle (8) and whereby the roller is arranged paraxial relative to the threaded spindle and the spindle (8) is bilaterally of the roller supported thereagainst such that in operation the relative position of the axis of the spindle and of the roller remains unchanged, characterized in that the roller (9) is rotatably and axially free from play adjustably supported by means of fritionless bearings (11) which take up radial forces on a rigid rod (12; 25) which is adjustable laterally to the threaded spindle in order to eliminate any play between roller and spindle and in the support (1) by means of frictionless bearings (21) which take up axial forces.

2. The spindle support of claim 1, characterized in that the grooves (10) of the roller extend in planes extending laterally to the axis of the threaded spindle.

3. The spindle support of claim 1, characterized in that the grooves (10) of the roller form together with the threads of the threaded spindle a cooperating thread.

4. The spindle support of one of the claims 2 and 3, characterized in that the threaded spindle is supported at the support (1) by means of two radial bearings (4) in form of needle bearings located bilaterally of the roller, whereby the needles run on the flattened points of the thread of the threaded spindle.

5. The spindle support of claim 4, characterized in that the roller (9) is supported on a sliding carriage (15) arranged laterally adjustable relative to the threaded spindle in the support (1)

and in that the frictionless bearings (11; 21) are needle bearings.

6. The spindle support of one of the claims 1 to 5, characterized in that if using several rollers (9) such are equally distributed along the circumference of the threaded spindle and are arranged relative to each other with their rollers (10) being located axially staggered by a fraction of the pitch of the thread (7) of the threaded spindle corresponding to the circumferential spacing between the individual rollers.

7. The spindle support of claim 5 or 6, characterized in that the axial staggering of the rollers (9) is made by axially exactly dimensioned washers (22, 23) which are located between the faces of the rollers and respective facing surface (24) on bearing webs (14, 18) of the carriage (15) for the roller axis (12).

8. The spindle support of claim 2, characterized in that the roller (9) and the support (1) are arranged at the rod (25) displaceable along its axis, whereby the rod (25) is adjustably supported in bearing pedestals (31) on the spindle.

## Revendications

1. Palier sans jeu pour le logement d'une tige filetée (8) dans un support (1), avec au moins un galet pouvant tourner autour de son axe et en prise, par l'intermédiaire de rainures pratiquées sur son pourtour, avec le filetage de la tige, l'axe du galet étant parallèle à la tige et réglable perpendiculairement à celle-ci, elle-même maintenue en appui contre le galet des deux côtés de ce dernier de façon à maintenir inchangée la position relative des axes et de la tige pendant le fonctionnement, caractérisé en ce que le galet est monté à rotation et sans jeu axial dans le support, en s'appuyant d'une part radialement par l'intermédiaire de roulements sur une barre fixe, réglable latéralement par rapport à l'axe de la tige pour supprimer tout jeu entre celle-ci et le galet, et en s'appuyant d'autre part axialement sur des roulements de butée portés par le support.

2. Palier selon la revendication 1, caractérisé en ce que les rainures (10) du galet s'étendent dans des plans perpendiculaires à l'axe de la tige filetée.

3. Palier selon la revendication 1, caractérisé en ce que les rainures (10) du galet forment un filetage coopérant avec celui de la tige filetée.

4. Palier selon une des revendications 2 et 3, caractérisé en ce que la tige filetée est logée dans deux paliers à aiguilles (4) portés par le support (1) et placés de part et d'autre du galet (9), les aiguilles portant sur les crêtes aplaties (6) du filetage (7) de la tige.

5. Palier selon la revendication 4, caractérisé en ce que le galet (9) est logé dans un coulisseau (15) réglable dans le support (1) latéralement par rapport à la tige filetée et en ce que les roulements (11; 21) sont des roulements à aiguilles.

6. Palier selon une des revendications 1 à 5, caractérisé par l'utilisation de plusieurs galets (9) répartis régulièrement sur la circonférence de la tige filetée (8) et dont les rainures (10) sont mutuellement décalées axialement d'une fraction du pas du filetage (7) de la tige correspondant au décalage angulaire mutuel des galets autour de la tige.

7. Palier selon les revendications 5 et 6, caractérisé en ce que le décalage axial des galets (9) est réalisé au moyen de cales (22, 23) calibrées avec précision axialement, placées entre les surfaces frontales des galets et les surfaces (24) se faisant face de flasques (14, 18) du coulisseau qui portent des logements pour les barres (12) supportant les galets.

8. Palier selon la revendication 2, caractérisé en ce que le galet (9) et le support (1) sont mobiles axialement le long de la barre (25), et que celle-ci est maintenue de façon réglable par rapport à la tige filetée (8) par des flasques (31).

Fig.1

Fig. 2

Fig. 3

Fig.4

Fig.5